Europäisches Patentamt

European Patent Office

Office européen des brevets

(11) Veröffentlichungsnummer: **0 403 786**
**A1**

## (12) EUROPÄISCHE PATENTANMELDUNG

(21) Anmeldenummer: 90109089.4

(51) Int. Cl.⁵: **B65G 1/04**

(22) Anmeldetag: 15.05.90

(30) Priorität: 22.06.89 DE 3920405

(43) Veröffentlichungstag der Anmeldung:
27.12.90 Patentblatt 90/52

(84) Benannte Vertragsstaaten:
AT CH ES FR GB IT LI NL SE

(71) Anmelder: Goldschmidt, Sol
Katharinenweg 6
CH-8002 Zürich(CH)

Anmelder: Ohl, Michel
15, route Flanville
F-57117 Montoy(FR)

(72) Erfinder: Goldschmidt, Sol
Katharinenweg 6
CH-8002 Zürich(CH)
Erfinder: Ohl, Michel
15, route Flanville
F-57117 Montoy(FR)

(74) Vertreter: Köhler, Günter, Dipl.-Ing.
Nordring 1
D-6458 Rodenbach(DE)

(54) Lageranlage.

(57) Eine Lageranlage besitzt in parallelen Reihen angeordnete Lagerkanäle (I-XI) auf einer oder mehreren Ebenen. In jeder Ebene ist eine Horizontalfördervorrichtung (30) entlang der Eingabeseiten (4) aller Lagerkanäle (I-XI) sowie eine Horizontalfördervorrichtung (40) entlang der Ausgabeseiten (6) aller Lagerkanäle (I-XI) angeordnet. Am einen Ende jeder Horizontalfördervorrichtung (30, 40) ist je eine Vertikalfördervorrichtung (10, 20) vorgesehen, welche die Lagereinheiten (2) von der Eingangsstelle bzw. Ausgangsstelle befördern. Einer der Lagerkanäle (VI), der Rücklaufkanal, ist mit Transportmitteln zum Verschieben der Lagereinheiten (2) von der Ausgabeseite (6) zur Eingabeseite (4) versehen, während alle anderen Lagerkanäle (I-V, VII-XI) Transportmittel zum Verschieben der Lagereinheiten von der Eingabeseite (4) zur Ausgabeseite (6) besitzen. Damit kann die Ein- und Auslagerung der Lagereinheiten (2) im Kreislauf innerhalb jeder Ebene erfolgen, ohne daß die Vertikalfördervorrichtungen (10, 20) beansprucht werden müssen.

Fig. 1

## LAGERANLAGE

Die Erfindung betrifft eine Lageranlage mit einer Mehrzahl von in einer oder mehreren horizontalen Ebenen in parallelen Reihen angeordneten Lagerkanälen nach dem Oberbegriff des Patentanspruchs 1.

Solche als Durchlaufregallager konzipierten Anlagen sind in einer Vielzahl von Ausführungen bekannt. Die einzelnen Lagerkanäle können dabei mit je einer Schienenfahrbahn ausgerüstet sein, die ein leichtes Gefälle von der Eingabeseite zur Ausgabeseite des Lagerkanals besitzt. Auf den Schienenfahrbahnen sind Rolluntersätze verfahrbar, welche die zu lagernden Güter, z.B. auf Paletten gestapelt, aufnehmen. Ein Regalförderfahrzeug übernimmt an der Eingangsstelle eine Lagereinheit, d.h. einen Rolluntersatz, auf dem eine Palette mit den einzulagernden Gütern steht, und bringt diese Lagereinheit an die Eingabeseite eines bestimmten Lagerkanals. Dort wird die Lagereinheit in den Lagerkanal eingegeben und durchläuft diesen unter Wirkung der Schwerkraft, bis sie auf die hinterste, bereits im Lagerkanal befindliche Lagereinheit aufläuft. Beim Auslagern einer Lagereinheit führt ein Regalförderfahrzeug an die Ausgabeseite des betreffenden Lagerkanals, übernimmt dort die vorderste Lagereinheit und bringt diese zur Ausgangsstelle.

Anstelle der Schienenfahrbahnen können in den Lagerkanälen auch Förderorgane vorgesehen sein, z.B. angetriebene Rollen- oder Kettenförderer, auf welche die Paletten direkt aufgesetzt werden.

Solche Lageranlagen haben sich in der letzten Zeit sehr bewährt, besitzen jedoch zwei Hauptnachteile:

Erstens eignen sie sich weniger für Warenlager mit sehr großen Sortimenten in jeweils relativ geringer Stückzahl, da in diesem Fall eine sehr große Anzahl von Lagerkanälen vorgesehen werden müßte, die alle relativ kurz wären. Da bei der Auslagerung einer Lagereinheit stets jeweils die vorderste Lagereinheit entnommen wird, müssen alle Lagerkanäle mit gleichartigen Lagereinheiten gefüllt werden.

Zweitens muß das Regalförderfahrzeug lange Wegstrecken und zahlreiche Leerfahrten zurücklegen, da es in einer konventionellen Lageranlage alle Bewegungen zwischen der zentralen Eingangs- bzw. Ausgangsstelle zu bewerkstelligen hat und somit in seiner Kapazität sehr beschränkt ist. Dies bringt eine unerwünschte Verzögerung der Ein- und Auslagerungsvorgänge mit sich.

Es ist die Aufgabe der vorliegenden Erfindung, eine Lageranlage der im Oberbegriff des Patentanspruchs 1 genannten Art so zu verbessern, daß sich die Lageranlage bei vergleichsweise geringem Platzbedarf auch für Warenlager mit sehr großem Sortiment und mit vielen Lagereinheiten pro Sortiment eignet, und daß die Ein- und Auslagerungsvorgänge sowie Umlagerungsvorgänge in derselben Ebene durch optimierte Ausnutzung der Transportvorrichtungen in wesentlich kürzerer Zeit bewerkstelligt werden können.

Diese Aufgabe wird bei einer Lageranlage der im Oberbegriff des Patentanspruchs 1 genannten Art durch die Merkmale im Kennzeichen dieses Anspruchs gelöst. Weiterbildungen der erfindungsgemäßen Lageranlage und bevorzugte Ausführungsformen sind Gegenstand der Unteransprüche.

Im folgenden wird ein Ausführungsbeispiel der erfindungs gemäßen Lageranlage unter Bezugnahme auf die beiliegenden Zeichnungen, näher beschrieben. In den Zeichnungen zeigen:

Fig. 1 einen schematischen Grundriß eines Stockwerks der Lageranlage;

Fig. 2 einen schematischen Schnitt entlang der Linie II-II in Fig. 1;

Fig. 3 einen schematischen Schnitt entlang der Linie III-III in Fig. 1; und

Fig. 4-15 schematische Grundrißdarstellungen von verschiedenen Phasen von Ein-, Aus- und Umlagerungsvorgängen.

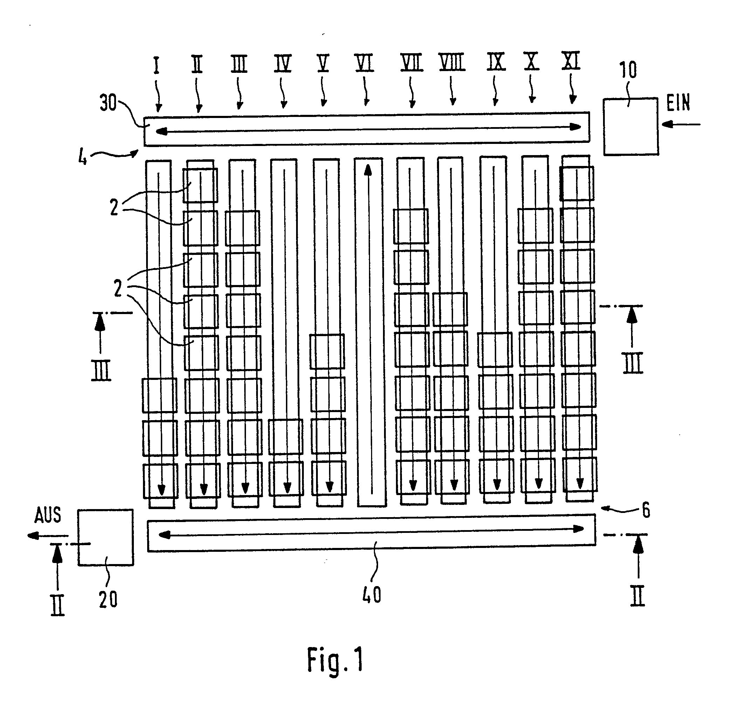

In der Fig. 1 ist der schematische Grundriß eines Stockwerks einer Mehrstöckigen Lageranlage gezeigt. Im Beispielsfall sind elf Lagerkanäle vorgesehen, die mit I - XI bezeichnet sind. Die Lagerkanäle sind parallel nebeneinander angeordnet und können mit Boden- oder Hängeschienen ausgerüstet sein, auf denen Rolluntersätze bzw. Hängefahrzeuge verfahrbar sind. Eine andere Möglichkeit besteht darin, die Lagerkanäle mit angetriebenen Förderern oder Rollenbahnen auszurüsten.

Die Kanäle I - V und VII - XI sind eigentliche Lagerkanäle, in denen die Lagereinheiten 2 aufgenommen sind. Je nach Ausrüstung der Lagerkanäle I - XI können die Lagereinheiten 2 mit Paletten beladene Rolluntersätze, Container, Hängefahrzeuge mit angehängten Gütern oder dergleichen sein. Die Mittel zum Verschieben der Lagereinheiten 2 in den Lagerkanälen I - V und VII - XI können z.B. durch ein Gefälle der Schienen oder einer Freilaufrollenbahn in Richtung von der Eingabeseite 4 zur Ausgabeseite 6 der Kanäle oder durch angetriebene Förderorgane mit einer Transportrichtung von der Eingabeseite 4 zur Ausgabeseite 6 gebildet sein.

Der Kanal VI ist der Rücklaufkanal, dessen Funktion im folgenden noch näher erläutert wird. Er kann mit Schienen oder einer Freilaufrollenbahn mit entgegengesetztem Gefälle oder aber mit Förderorganen ausgerüstet sein, deren Förderrichtung entgegengesetzt zu derjenigen der restlichen Kanäle verläuft.

Rechtwinklig zu den Kanälen I - XI erstreckt sich entlang den Eingabeenden 4 der Kanäle eine Horizontalfördervorrichtung 30, die in beiden Richtungen antreibbar ist. Sie ist mit nicht dargestellten Übernahme- bzw. Übergabevorrichtungen ausgestattet, durch die eine Lagereinheit 2 vom Rücklaufkanal VI übernommen bzw. in einen der Lagerkanäle I - V und VII - XI übergeben werden kann. Am einen Ende der Horizontalfördervorrichtung 30 ist eine Vertikalfördervorrichtung 10 vorgesehen, die ebenfalls von den genannten Übernahme- bzw. Übergabevorrichtungen bedient wird.

Entlang den Ausgabeenden 6 der Lagerkanäle I - V und VII -XI und rechtwinklig zu diesen verlaufend, erstreckt sich eine Horizontalfördervorrichtung 40, die ebenfalls in beiden Richtungen antreibbar ist. In entsprechender Weise ist sie mit nicht dargestellten Übernahme- bzw. Übergabevorrichtungen ausgestattet, durch die eine Lagereinheit 2 in den Rücklaufkanal VI übergeben bzw. von einem der Laerkanäle I - V und VII - XI übernommen werden kann. Am einen Ende der Horizontalfördervorrichtung 40 ist eine Vertikalfördervorrichtung 20 vorgesehen, die ebenfalls von den genannten Übernahme- bzw. Übergabevorrichtungen bedient wird.

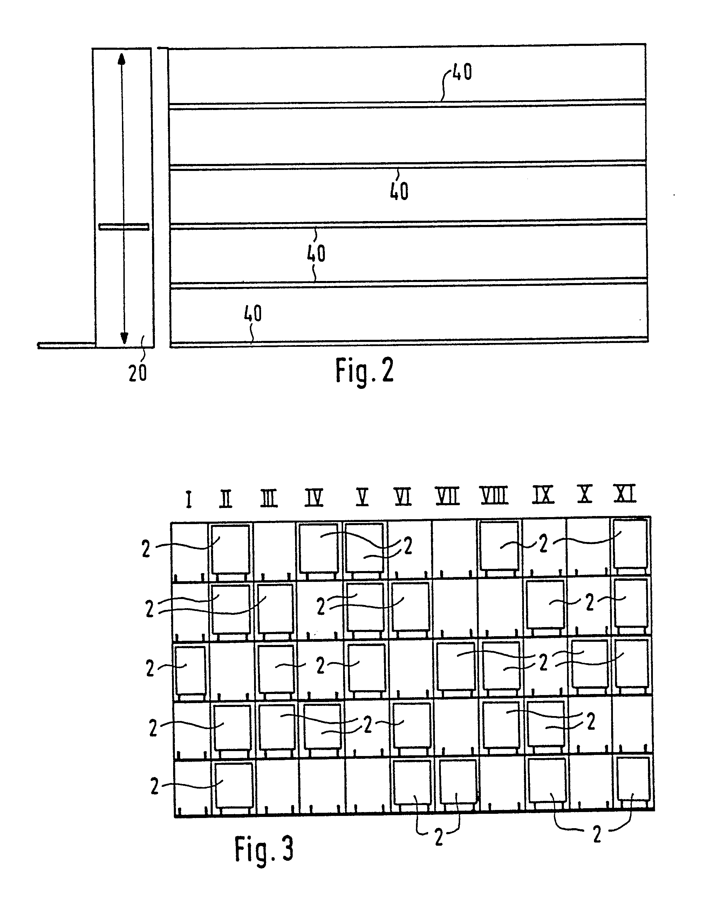

Aus den Fig. 2 und 3 ist ersichtlich, daß die Lageranlage im Beispielsfall fünf Stockwerke besitzt. Jedes Stockwerk ist mit einer eigenen Horizontalfördervorrichtung 30 und einer eigenen Horizontalfördervorrichtung 40 ausgerüstet. Die Vertikalfördervorrichtungen 10 und 20 hingegen bedienen alle Stockwerke.

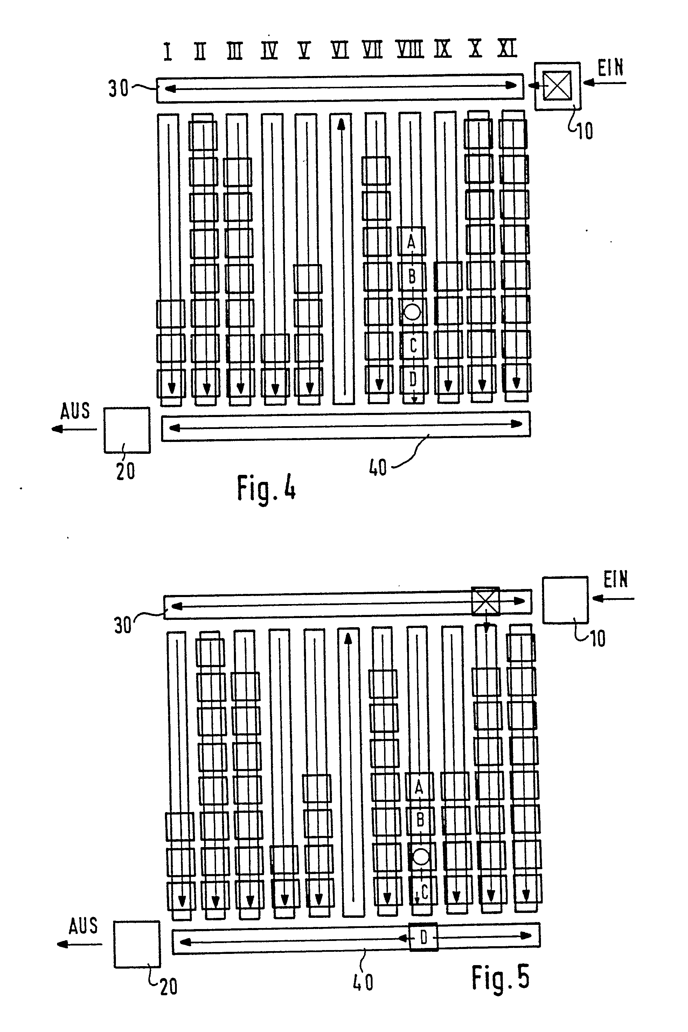

Im folgenden soll die Funktion der erfindungsgemäßen Lageranlage anhand der schematischen Darstellungen in den Fig. 4-15 beispielsweise beschrieben werden:

Ausgehend von der in Fig. 4 gezeigten Situation, soll eine mit einem Kreuz bezeichnete Lagereinheit eingelagert und eine mit einem Kreis bezeichnete Lagereinheit ausgelagert werden. Die mit einem Kreuz bezeichnete Lagereinheit befindet sich bereits in der Vertikalfördervorrichtung 10 und wurde von dieser auf die betreffende Lagerebene gebracht. Die mit einem Kreis bezeichnete Lagereinheit befindet sich im Lagerkanal VIII an dritter Stelle und soll in die Vertikalfördervorrichtung 20 verschoben werden, die sie in das Erdgeschoß zum Lagerausgang bringt.

Gemäß Fig. 5 wurde die mit einem Kreuz bezeichnete Lagereinheit von einem nicht dargestellten Übergabegerät von der Vertikalfördervortung 10 an die Horizontalfördervorrichtung 30 übergeben. Durch letztere wird die mit einem Kreuz bezeichnete Lagereinheit in Fig. 5 nach links bis an den Anfang eines Lagerkanals verschoben, der noch mindestens einen freien Platz an der Eingabeseite aufweist; im vorliegenden Beispiels ist dies der Lagerkanal X. Gleichzeitig wurde die erste Lagereinheit am Ausgabeende desjenigen Kanals, in der sich die mit einem Kreis bezeichnete Lagereinheit befindet, im vorliegenden Beispiel die Lagereinheit D des Kanals VIII, durch eine nicht gezeigte Übergabevorrichtung aus dem Kanal VIII an die Horizontalfördervorrichtung 40 übergeben.

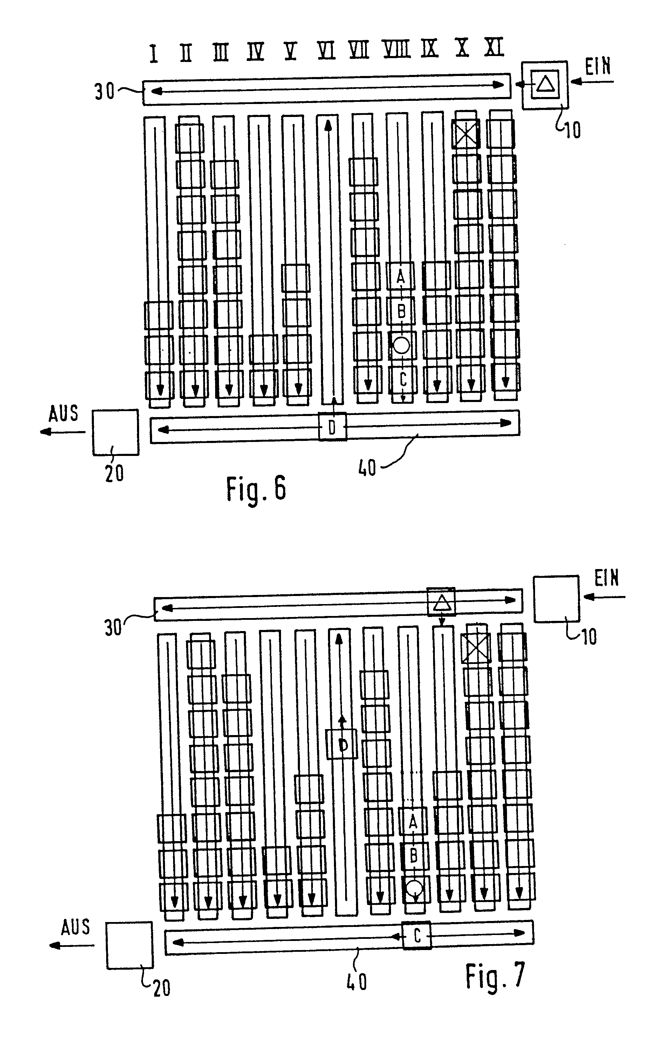

Gemäß Fig. 6 wurde die mit einem Kreuz bezeichnete Lagereinheit, die vor dem Anfang des Kanals X stand, durch ein nicht dargestelltes Übergabegerät in diesen Kanal hineinverschoben, während die Vertikalfördervorrichtung 10 in der Zwischenzeit eine weitere einzulagernde Lagereinheit geholt hat, nämlich die mit einem Dreieck bezeichnete Lagereinheit, die sich bereits in der Vertikalfördervorrichtung 10 befindet. Ebenfalls gleichzeitig wurde die Lagereinheit D vom Ausgang des Lagerkanals VIII vor den Rücklaufkanal VI verschoben. Die restlichen im Kanal VIII befindlichen Lagereinheiten A und B, die mit einem Kreis bezeichnete Lagereinheit und die Lagereinheit C sind nachgerückt, so daß nun die Lagereinheit C am Ende des Lagerkanals VIII steht.

Gemäß Fig. 7 wurde die mit einem Dreieck bezeichnete Lagereinheit von einem nicht dargestellten Übergabegerät von der Vertikalfördervorrichtung 10 an die Horizontalfördervorrichtung 30 übergeben. Durch letztere wird die mit einem Dreieck bezeichnete Lagereinheit in Fig. 7 nach links bis an den Anfang eines Lagerkanals verschoben, der noch mindestens einen freien Platz an der Eingabeseite aufweist; im vorliegenden Beispiel ist dies der Lagerkanal IX. Gleichzeitig wurde die letzte Lagereinheit am Ende des Lagerkanals VIII, nämlich die Lagereinheit C, durch das Übergabegerät an die Horizontalfördervorrichtung 40 übergeben, auf der sie Richtung Rücklaufkanal VI befördert wird. Schließlich wird die Lagereinheit D, die in den Rücklaufkanal VI gegeben wurde, ebenfalls gleichzeitig an dessen Ende verschoben.

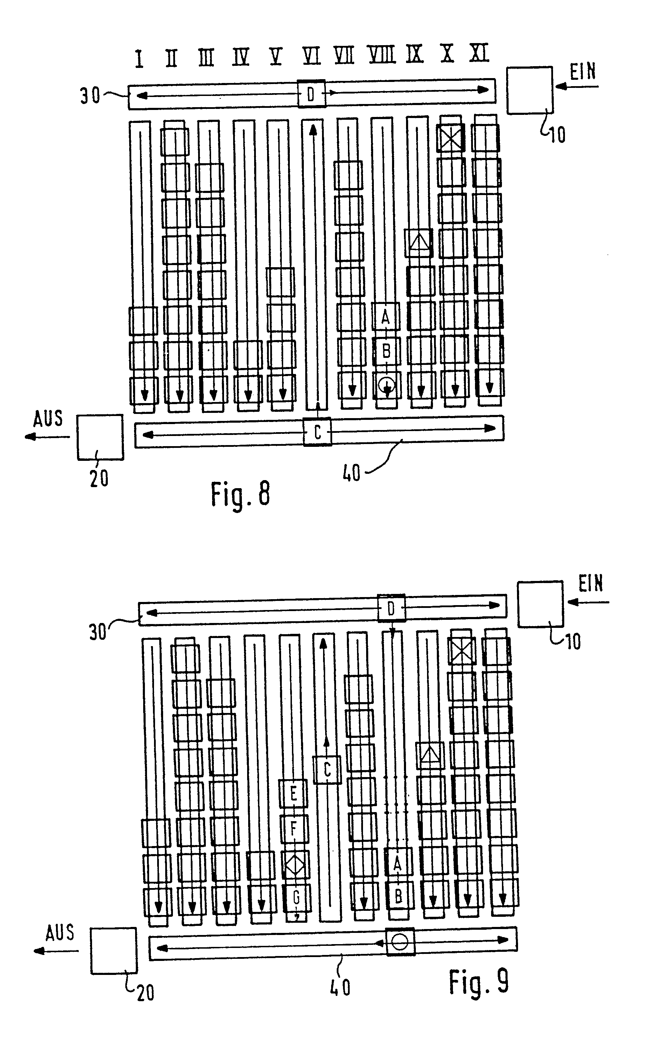

Gemäß Fig. 8 wurde die mit einem Dreieck bezeichnete Lagereinheit mittels des Übergabegerätes von der Horizontalfördervorrichtung 30 in den nächsten freien Lagerkanal IX übergeben. Dort hat sie auf die Lagereinheiten aufgeschlossen, die sich bereits in diesem Kanal befanden. Ferner wurde die Lagereinheit D aus dem Rücklaufkanal VI an die Horizontalfördervorrichtung 30 übergeben, durch die sie in Richtung auf den Anfang des Lagerkanals VIII befördert wird. Schließlich wurde die Lagereinheit C durch die Horizontalfördervorrichtung 40 an den Anfang des Rücklaufkanals VI befördert, wo sie zur Übergabe in diesen bereit steht.

Gemäß Fig. 9 steht nun die Lagereinheit D am Anfang des Lagerkanals VIII zur Übergabe in diesen bereit. Außerdem wurde die mit einem Kreis

3

bezeichnete Lagereinheit, die nun an vorderster Position dieses Kanals stand, auf die Horizontalfördervorrichtung 40 übergeben, durch die sie in Richtung auf die Vertikalfördervorrichtung 20 befördert wird. Die Lagereinheit C befindet sich im Rücklaufkanal VI und wird in diesem in Richtung auf die Horizontalfördervorrichtung 30 befördert. Schließlich hat es sich ergeben, daß als nächstes die mit einem Quadrat bezeichnete Lagereinheit ausgelagert werden soll. Diese steht im Lagerkanal V an zweiter Stelle. so daß zuerst die Lagereinheit G umgelagert werden muß.

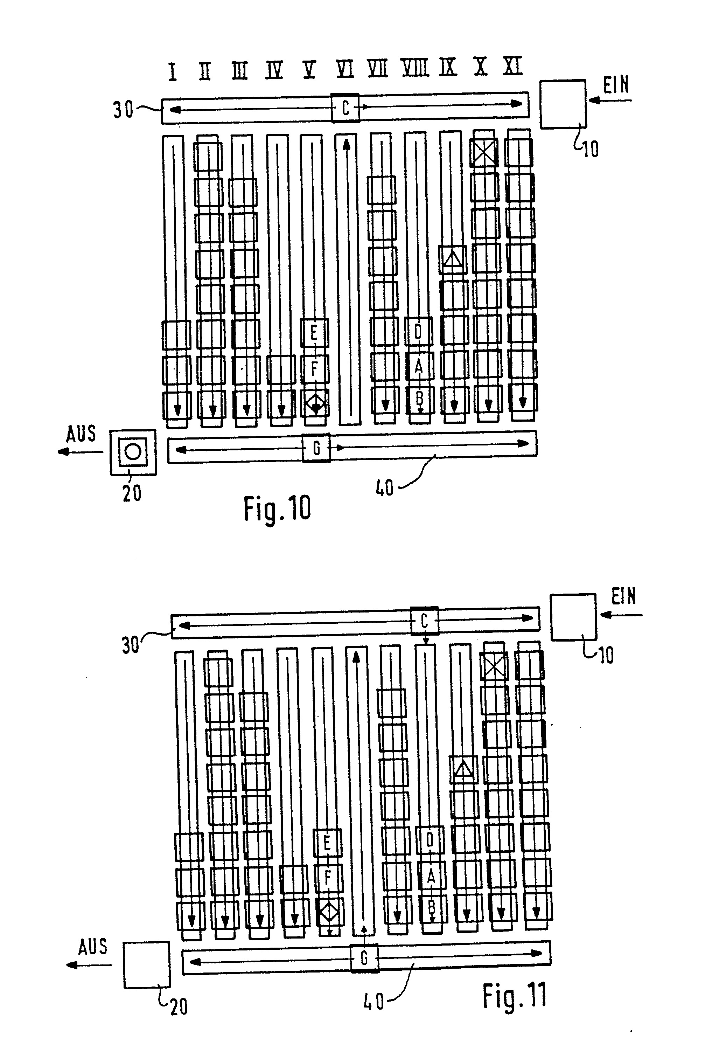

Gemäß Fig. 10 wurde die Lagereinheit D von der Horizontalfördervorrichtung 30 aus in den Lagerkanal VIII übergeben, wo sie auf die Lagereinheiten A und B aufgeschlossen hat. Ferner wurde die Lagereinheit C vom Rücklaufkanal VI an die Horizontalfördervorrichtung 30 übergeben, durch die sie an den Anfang des Lagerkanals VIII befördert wird. Die mit einem Kreis bezeichnete Lagereinheit befindet sich bereits in der Vertikalfördervorrichtung 20 und wird von dieser ins Erdgeschoß zum Ausgang des Lagers gebracht. Schließlich wurde noch die vorderste Lagereinheit G des Lagerkanals V an die Horizontalfördervorrichtung 40 übergeben, durch die sie in Richtung auf den Anfang des Rücklaufkanals VI befördert wird.

Gemäß Fig. 11 steht die Lagereinheit C am Anfang des Lagerkanals VIII zur Übergabe in diesen bereit. Außerdem steht die Lagereinheit G vor dem Anfang des Rücklaufkanals VI zur Übergabe in diesen bereit. Die auszulagernde, mit einem Quadrat bezeichnete Lagereinheit steht nun an vorderster Stelle des Lagerkanals V und kann als nächstes aus dem Kanal entnommen werden.

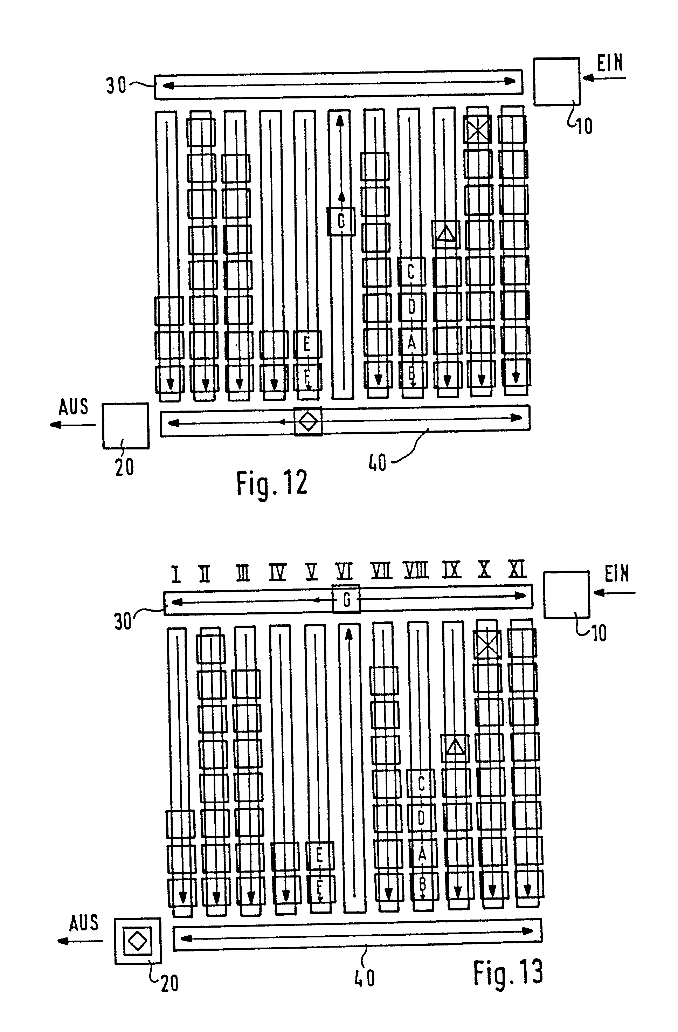

Gemäß Fig. 12 wurde die Lagereinheit C von der Horizontalfördervorrichtung 30 in den Lagerkanal VIII übergeben, wo sie auf die bereits darin befindlichen Lagereinheiten D, A und B aufgeschlossen hat. Die den Lagerkanal VIII betreffenden Aus- und Umlagerungsvorgänge sind damit abgeschlossen. Die Lagereinheit G hatte den Anfang des Rücklaufkanals VI erreicht, wurde von der Horizontalfördervorrichtung 40 in diesen hinein übergeben und bewegt sich jetzt im Rücklaufkanal VI in Richtung auf die Horizontalfördervorrichtung 30. Die mit einem Quadrat bezeichnete Lagereinheit schließlich wurde vom Lagerkanal V aus an die Horizontalfördervorrichtung 40 übergeben und wird von dieser in Richtung auf die Vertikalfördervorrichtung 20 befördert.

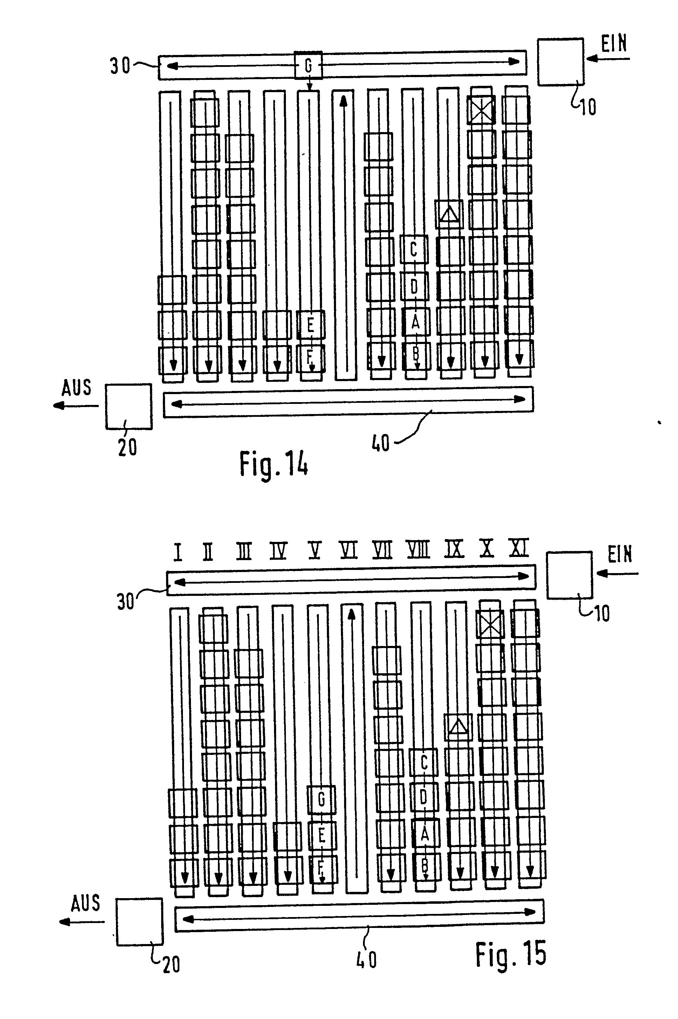

Gemäß Fig. 13 wurde die Lagereinheit G vom Rücklaufkanal VI an die Horizontalfördervorrichtung 30 übergeben, durch die sie an den Anfang des Lagerkanals V befördert wird. Die mit einem Quadrat bezeichnete Lagereinheit hat die Vertikalfördervorrichtung 20 erreicht und wird durch diese ins Erdgeschoß zum Ausgang des Lagers befördert.

Gemäß Fig. 14 hat die Lagereinheit G den Anfang des Lagerkanals V erreicht und wird nun von der Horizontalfördervorrichtung 30 in diesen übergeben. Gemäß Fig. 15 schließlich hat die Lagereinheit G wieder auf die bereits in diesem Kanal V befindlichen Lagereinheiten E und F aufgeschlossen.

Es ist auch möglich, auf die Vertikalfördervorrichtung 10 zu verzichten. In diesem Fall übernimmt die Vertikalfördervorrichtung 20 sowohl die Aufgabe, einzulagernde Lagereinheiten 2 von der Eingangsstelle zur Horizontalförder vorrichtung 40 zu bringen als auch auszulagernde Lagereinheiten 2 von der Horizontalfördervorrichtung 40 zu übernehmen und an die Ausgangsstelle zu bringen. Der generelle Ablauf der Ein- und Auslagerungsvorgänge ist prinzipiell gleich wie vorstehend beschrieben, mit dem Unterschied, daß ankommende Lagereinheiten 2 zunächst von der Horizontalfördervorrichtung 40 bis zum Rücklaufkanal VI, in diesem zur Horizontalfördervorrichtung 30 und durch diese an den Anfang eines noch freien Platz aufweisenden Lagerkanals befördert werden.

Statt eines einzigen oder zweier Regalbediengeräte(s), das bzw. die in den herkömmlichen Lägern alle Bewegungen zwischen der Ein- und Ausgangsstelle und den Lagerkanälen zu bewerkstelligen hat bzw. haben und somit in der Kapazität sehr beschränkt ist bzw. sind, wird die erfindungsgemäße Lageranlage mit mehreren Transportorganen ausgerüstet. Bei einem Durchlauflager mit sechs Geschossen sind pro Ebene zwei Horizontalförderer sowie zwei Vertikalförderer für die Bedienung aller Ebenen vorgesehen, insgesamt also 14 Transportorgane.

Die zur Kommissionierung benötigten Lagereinheiten, z.B. mit Paletten beladene Rolluntersätze, brauchen nicht an vorderster Stelle der Lagerkanäle zu stehen. Sind sie es nicht, so werden die vorgelagerten Lagereinheiten aus dem Lagerkanal entfernt und auf der anderen Seite wieder eingelagert. Die Ein- und Auslagerung erfolgt dabei auf dem betreffenden Lagerniveau unter Inanspruchnahme der Horizontalfördervorrichtungen, so daß die Vertikalfördervorrichtungen für andere Transportaufgaben frei sind.

Die Fördertechnik kann so angepaßt sein, daß ein vollständiger Umschlag des gesamten Lagers, d.h. sämtlicher Lagereinheiten, innerhalb einer bestimmten Zeitspanne, z.B. innerhalb von 24 Stunden möglich ist. Auf diese Weise können alle chaotisch gelagerten Waren innerhalb dieser Zeitspanne erfaßt werden.

Die Eingangsstelle und die Ausgangsstelle sind vorzugsweise mit Eingangs- bzw. Ausgangspuffern versehen. Die Beladung bzw. Entladung der Vertikalfördervorrichtungen kann normalerweise über Transfergeräte erfolgen, die außerhalb der Fördervorrichtungen angeordnet sind. Die Horizontalfördervorrichtungen können, sofern ein kontrollierter Betrieb erforderlich ist, mit Transfergeräten versehen werden. Alternativ kann die Übergabe von und zu den Horizontalfördervorrichtungen durch Gefälle bewirkt werden.

Mit der erfindungsgemäßen Lageranlage ist eine technisch einfache, zuverlässige sowie finanziell interessante Lösung für die Lagerung von Waren in großer Anzahl und mit großem Sortiment geschaffen, bei der die Einlagerungsfolge ungleich der Auslagerungsfolge ist. Es lassen sich sehr kurze Rückführungsstrecken und -zeiten realisieren. Bei einer Lageranlage mit einer großen Anzahl von Lagerkanälen pro Ebene kann es zweckmäßig sein, nicht nur einen, sondern mehrere Rücklaufkanäle vorzusehen. Im Extremfall, wenn außerordentlich viele Ein- und Auslagerungsvorgänge zu erwarten sind, kann jedem Lagerkanal ein danebenliegender Rücklaufkanal zugeordnet sein, so daß die Lagereinheiten praktisch in einem Kreislauf zirkulieren.

**Ansprüche**

1. Lageranlage mit einer Mehrzahl von in einer oder mehreren im wesentlichen horizontalen Ebenen in parallelen Reihen angeordneten Lagerkanälen (I - XI), die eine Eingabeseite (4) und eine Ausgabeseite (6) besitzen und welche die zu lagernden Einheiten (2) aufnehmen, mit einer Eingangsstelle und einer Ausgangsstelle und mit Transportvorrichtungen (10, 20, 30, 40) zum Verschieben der Lagereinheiten (2) von der Eingangsstelle in die Lagerkanäle (I - XI) sowie zum Verschieben der Lagereinheiten (2) aus den Lagerkanälen (I - XI) zur Ausgangsstelle, **dadurch gekennzeichnet,** daß mindestens ein Lagerkanal (VI) mit Mitteln zum Verschieben der Lagereinheiten von der Ausgabeseite (6) zur Eingabeseite (4) und die verbleibenden Lagerkanäle (I-V, VII-XI) mit Mitteln zum Verschieben der Lagereinheiten (2) von der Eingabeseite (4) zur Ausgabeseite (6) versehen sind, und daß erste Transportmittel (30) zum Hinund Herverschieben der Lagereinheiten (2) vor den Eingabeseiten (4) aller Kanäle (I-XI) einer Ebene, zweite Transportmittel (40) zum Hin- und Herverschieben der Lagereinheiten (2) vor den Ausgabeseiten (6) aller Kanäle (I-XI) einer Ebene sowie mindestens dritte Transportmittel (20) für den Hinund Rückschub von Lagereinheiten (2) zu und von den genannten zweiten Transportmitteln (40) vorgesehen sind.

2. Lageranlage nach Anspruch 1, dadurch gekennzeichnet, daß ferner vierte Transportmittel (10) für den Hinschub von Lagereinheiten (2) zu den genannten ersten Transportmitteln (30) vorgesehen sind.

3. Lageranlage nach Anspruch 1 oder 2 mit einer Mehrzahl von in mehreren übereinanderliegenden, im wesentlichen horizontalen Ebenen in parallelen Reihen angeordneten Lagerkanälen, dadurch gekennzeichnet, daß die den ersten Transportmitteln (30) zugeordneten vierten Transportmittel (10) Mittel zum Verschieben der Lagereinheiten (2) in vertikaler Richtung und/oder die den zweiten Transportmitteln (40) zugeordneten dritten Transportmittel (20) Mittel zum Verschieben der Lagereinheiten (2) in vertikaler Richtung umfassen.

4. Lageranlage nach einem der vorangehenden Ansprüche, dadurch gekennzeichnet, daß mehrere, höchstens aber die Hälfte der Lagerkanäle (I-XI) pro Stockwerk mit Mitteln zum Verschieben der Lagereinheiten von der Ausgabeseite (6) zur Eingabeseite (4) versehen sind.

5. Lageranlage nach einem der vorangehenden Ansprüche, dadurch gekennzeichnet, daß die Lagerkanäle (I-XI) mit Band-, Rollen- oder Kettenförderern ausgerüstet sind, die bei mindestens einem Lagerkanal (VI) zu einer Transportbewegung von der Ausgabeseite (6) zur Eingabeseite (4) und bei allen verbleibenden Lagerkanälen (I-V, VII-XI) zu einer Transportbewegung von der Eingabeseite (4) zur Ausgabeseite (6) angetrieben sind.

6. Lageranlage nach einem der Ansprüche 1 bis 4, dadurch gekennzeichnet, daß die Lagerkanäle (I-XI) mit gefällebehafteten Schienenfahrbahnen ausgerüstet sind, wobei das Gefälle bei mindestens einem Lagerkanal (VI) von der Ausgabeseite (6) zur Eingabeseite (4) hin und bei allen verbleibenden Lagerkanälen (I-V, VII-XI) von der Eingabeseite (4) zur Ausgabeseite (6) hin verläuft.

7. Lageranlage nach einem der vorangehenden Ansprüche, dadurch gekennzeichnet, daß die ersten Transportmittel (30) zum Hin- und Herverschieben der Lagereinheiten (2) vor den Eingabeseiten (4) aller Kanäle (I-XI) einer Ebene einen in beiden Richtungen antreibbaren Band-, Rollen-oder Kettenförderer oder angetriebene, in beiden Richtungen verfahrbare Transportwagen umfassen.

8. Lageranlage nach einem der Ansprüche 1 bis 7, dadurch gekennzeichnet, daß die zweiten Transportmittel (40) zum Hin- und Herverschieben der Lagereinheiten (2) vor den Ausgabeseiten (6) aller Kanäle (I-XI) einer Ebene einen in beiden Richtungen antreibbaren Band-, Rollen- oder Kettenförderer oder angetriebene, in beiden Richtungen verfahrbare Transportwagen umfassen.

9. Lageranlage nach einem oder mehreren der vorangehenden Ansprüche, dadurch gekennzeichnet, daß die dritten Transportmittel (20) ein vertikal verschiebbar angeordnetes Förderorgan umfassen, das anschließend an das eine Ende der zweiten Transportmittel (40) angeordnet ist, und/oder ein vertikal verschiebbar angeordnetes Förderorgan umfassen, das anschließend an das eine Ende der

**EP 0 403 786 A1**

ersten Transportmittel (30) angeordnet ist.

Fig.1

Fig. 2

I   II   III   IV   V   VI   VII   VIII   IX   X   XI

Fig. 3

Fig. 4

Fig. 5

R 210 40

Fig. 6

Fig. 7

R 210 40

Fig. 8

Fig. 9

R 210 40

I  II  III  IV  V  VI  VII  VIII  IX  X  XI

EIN

30

C

10

E
F

D
A
B

AUS

G

20

40

Fig. 10

EIN

C

30

10

E
F

D
A
B

AUS

G

20

40

Fig. 11

R 210 40

Fig. 12

Fig. 13

R 210 40

Fig.14

Fig. 15

R 210 40

## EINSCHLÄGIGE DOKUMENTE

EP 90109089.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>DE - A1 - 2 526 049</u><br>(MITSUBISHI JUKOGYO K.K.)<br>   * Seiten 1,2; Fig. 1 *<br>-- | 1 | B 65 G 1/04 |
| A | <u>US - A - 3 927 773</u><br>(BRIGHT)<br>   * Zusammenfassung; Fig. 1 *<br>---- | 1 | |

RECHERCHIERTE SACHGEBIETE (Int. Cl.⁵)

B 65 G

Der vorliegende Recherchenbericht wurde für alle Patentansprüche erstellt

| Recherchenort | Abschlußdatum der Recherche | Prüfer |
|---|---|---|
| WIEN | 28-09-1990 | PISSENBERGER |